# EUROPEAN PATENT SPECIFICATION

(11) **EP 2 390 768 B1**
(45) Date of publication and mention of the grant of the patent: **20.08.2014**
(21) Application number: 10733580.4
(22) Date of filing: 15.01.2010
(51) Int. Cl.: G06F 3/023

(54) **INPUT DEVICE, INFORMATION PROCESSING DEVICE, INPUT METHOD, AND PROGRAM**
EINGABEVORRICHTUNG, INFORMATIONSVERARBEITUNGSVORRICHTUNG, EINGABEVERFAHREN UND PROGRAMM DAFÜR
DISPOSITIF D'ENTRÉE, DISPOSITIF DE TRAITEMENT D'INFORMATIONS, PROCÉDÉ D'ENTRÉE ET PROGRAMME

(30) Priority: 20.01.2009 JP 2009009713
(43) Date of publication of application: 30.11.2011
(73) Proprietor: NEC Corporation, Tokyo 108-8001 (JP)
(72) Inventor: SHIOIRI, Kenta, Tokyo 108-8001 (JP)
(74) Representative: Vossius & Partner
(86) International application number: PCT/JP2010/050853
(87) International publication number: WO 2010/084973

(56) References cited:
- JP-A- 2005 100 186
- JP-A- 2005 100 186

## Description

### TECHNICAL FIELD

The present invention relates to an input device, which performs a predetermined input by a plurality of keys operated simultaneously.

### BACKGROUND ART

Conventionally, in an information processing device, such as a PC (Personal Computer), equipped with a keyboard, a predetermined input, such as a control command or a word, is performed by a plurality of keys operated simultaneously. Then, in a virtual keyboard displayed on a touch panel or a mechanical keyboard, when the key itself or a distance to the adjacent key is small, a wrong key may be pressed, or a plurality of keys may be pressed simultaneously by one finger, and an incorrect input may be performed. Accordingly, even in such a case, in order to realize inputting the desired command or the word, various proposals have been made.

For example, in patent document 1, a method of generating a series of character candidates to each of characters in an inputted word, and of showing a word candidate to a user from the character candidates and an agreement probability, is disclosed.

Furthermore, in patent document 2, an input device for performing an input by a plurality of keys operated simultaneously is described, the input device comprising detecting means for detecting a state of keys, memory means for storing a combination of keys operated simultaneously, which corresponds to a predetermined input and prediction means for predicting a combination of keys, according to said detected state of keys by said detecting means and said stored combination of keys in said memory means.
[Patent document 1] Japanese Unexamined Patent Application Publication (Translation of PCT Application) No. 2007-524949
[Patent document 2] Japanese Unexamined Patent Application Publication No. 2005-100186.

### SUMMARY OF INVENTION

### Technical Problem

However, in the art mentioned above, because a key, which the user can press, is not restricted and a key operation can be performed freely, a number of candidates increases as much as the user makes mistakes. For this reason, because the user has to select an intended input from a large number of candidates, it takes a lot of trouble.

Accordingly, the object of the present invention is to provide an input device, an information processing device, an input method and a program, by which a user can smoothly perform an intended key input.

### Solution to Problem

In order to solve the problems mentioned above, an input device according to the present invention is an input device for performing a predetermined input by a plurality of keys operated simultaneously, characterized by comprising: a detecting unit for detecting a state of keys being operated; a memory unit for storing a combination of keys operated simultaneously, which becomes a predetermined input; a prediction unit, based on a result of detection by the detecting unit and the combination stored in the memory unit, for predicting a combination of keys operated simultaneously; and an input control unit for invalidating an operation for a key, which is not included in the combination predicted by the prediction unit.

Further, an information processing device according to the present invention is an information processing device for performing an information processing based on an input from an input device, characterized in that the input device includes the above-mentioned input device.

Furthermore, an input method according to the present invention is an input method for performing a predetermined input in an input device by a plurality of keys operated simultaneously, characterized by comprising: a step that a detecting unit detects a state of keys being operated; a step that a memory unit stores a combination of keys operated simultaneously, which becomes a predetermined input; a step that a prediction unit, based on a result of detection by the detecting unit and the combination stored in the memory unit, predicts a combination of keys operated simultaneously; and a step that an input control unit invalidates an operation for a key, which is not included in the combination predicted by the prediction unit.

Further, a program according to the present invention is characterized by making a computer, for performing a predetermined input by a plurality of keys operated simultaneously, operate as: a detecting unit for detecting a state of keys being operated; a memory unit for storing a combination of keys operated simultaneously, which becomes a predetermined input; a prediction unit, based on a result of detection by the detecting unit and the combination stored in the memory unit, for predicting a combination of keys operated simultaneously; and an input control unit for invalidating an operation for a key, which is not included in the combination predicted by the prediction unit.

### Advantageous Effects of Invention

According to the present invention, because an operation of a key, which is not included in predicted combination, is made invalid, even if a wrong pressing by the user occurs, the wrong pressing is made invalid, then as a result, the user can smoothly perform an intended key input.

### BRIEF DESCRIPTION OF DRAWINGS

FIG. 1 is an exemplary diagram showing a configuration of an input device according to a first embodiment of the present invention;
FIG. 2 is a flowchart showing an operation of the input device according to the first embodiment of the present invention;
FIG. 3 is an exemplary diagram showing a configuration of an input device according to a second embodiment of the present invention;
FIG. 4 is an exemplary diagram showing an example of a display screen of a touch panel device 21 when a first candidate key is inputted;
FIG. 5 is a flowchart showing an operation of the input device according to the second embodiment of the present invention;
FIG. 6 is an exemplary diagram showing an example of the display screen of the touch panel device 21 where the first candidate key is highlighted;
FIG. 7 is an exemplary diagram showing an example of the display screen of the touch panel device 21 when the second candidate key is selected;
FIG. 8 is an explanatory diagram illustrating a prediction operation for an input candidate when a new key input is performed; and
FIG. 9 is an exemplary diagram showing an example of the display screen of the touch panel device 21 when a finger is shifted.

### DESCRIPTION OF EMBODIMENTS

Hereinafter, with reference to a drawing, the embodiment of the present invention will be described in detail.

### [First Embodiment]

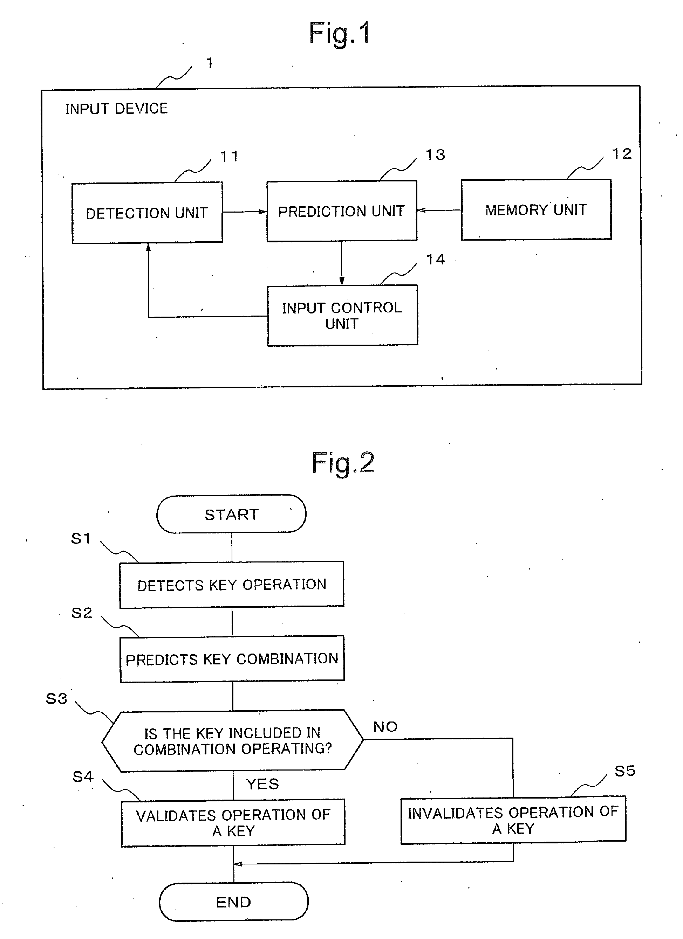

First, a first embodiment according to the present invention will be described. As shown in FIG. 1, an input device 1 according to the present embodiment is an input device, which for example performs predetermined input by operating a plurality of keys simultaneously in the case of inputting a control command, a predetermined word or the like. The input device 1 includes a detecting unit 11 which detects an operation of a key by the user, and a memory unit 12 which stores combination of keys operated simultaneously. The input device 1 further includes a prediction unit 13 which predicts combination of keys operated simultaneously based on a detection result by the detecting unit 11 and the combination of keys stored in the memory unit 12, and an input control unit 14 which invalidates an operation of a key among key operations detected by the detecting unit 11, which is not included in the combination predicted by the prediction unit 13.

The input device 1, as above, includes a computer equipped with an arithmetic unit such as a CPU; a memory; a storage device such as an HDD (Hard Disk Drive); an I/P device which detects information input from outside, such as a keyboard, a touch panel or the like; a display device, such as a CRT (Cathode Ray Tube), an LCD (Liquid Crystal Display), an FED (Field Emission Display), an organic EL (Electro Luminescence) or the like, and a program installed in the computer. By the hardware resources, as above, and software, cooperating with each other, the above-mentioned hardware resources are controlled by the program, and the detecting unit 11, the memory unit 12, the prediction unit 13 and the input control unit 14 mentioned above are realized.

Next, an operation of the input device 1 according to the present embodiment will be described.

First, when by touching the touch panel, on which a keyboard image is displayed or by pressing the keyboard, a key operation by the user is detected, the detecting unit 11 transmits the detection result to the prediction unit 13 (Step S1).

The prediction unit 13, on receiving the detection result by the detecting unit 11, refers to the memory unit 12, and predicts combination of keys configuring a control command or a word, which the user is going to input (Step S2).

After the combination of keys is predicted by the prediction unit 13, on detecting a user's operation of a key by the detecting unit 11, if the key is not included in the combination keys predicted by the prediction unit 13 (Step S3: NO), the input control unit 14 invalidates information on the operation of the key, that is, the information is neither transmitted to the prediction unit 13 nor displayed on the display device nor outputted to the outside.

On the other hand, when the operated key is included in the predicted combination of keys by the prediction unit 13 (Step S4), the input control unit 14 validates the information on the operation of the key, that is, the information is transmitted to the prediction unit 13 or displayed on the display device or outputted to the outside (step S3:YES).

Thus, according to the present embodiment, when a key, which is not included in combination predicted by the prediction unit 13, is operated, the operation is made invalid, then, if wrong pressing by the user occurs the wrong pressing becomes invalid, therefore smoother input operation for an intended key can be performed.

### [Second embodiment]

Next, the second embodiment according to the present invention will be described.

### <Configuration of an input device 2>

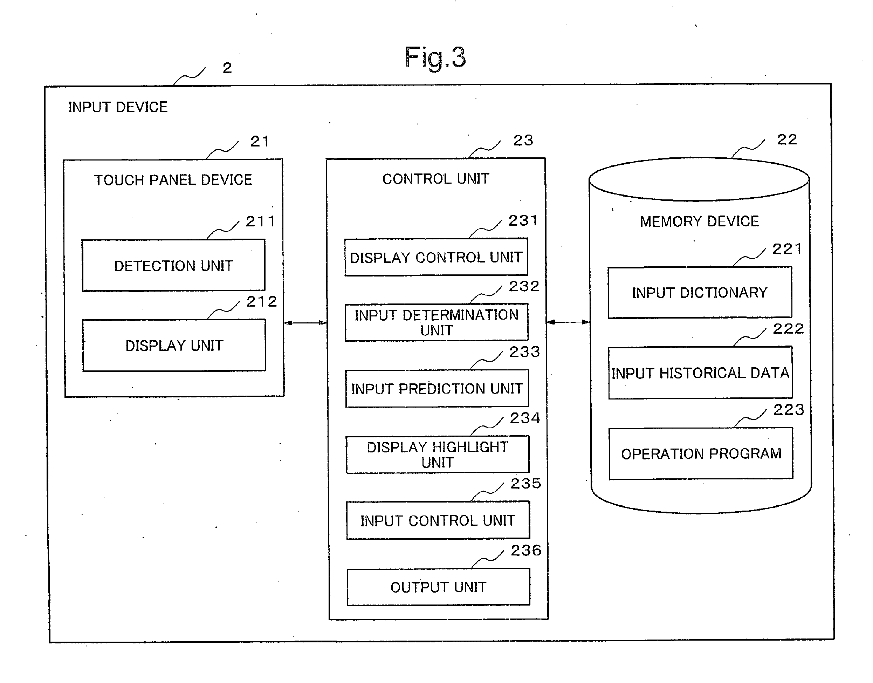

As shown in FIG. 3, an input device 2 according to the present embodiment includes: a touch panel device 21, which displays keys or the like and detects an operation input by the user; and a memory device 22, which stores various information necessary for operation of the input device 2. The input device 2 further includes a control unit 23, which predicts a key input desired by the user based on the key input detected by the touch panel 21 and the information stored in the memory device 22, and displays a predicted candidate on the touch panel device 21.

### < <Touch panel device>>

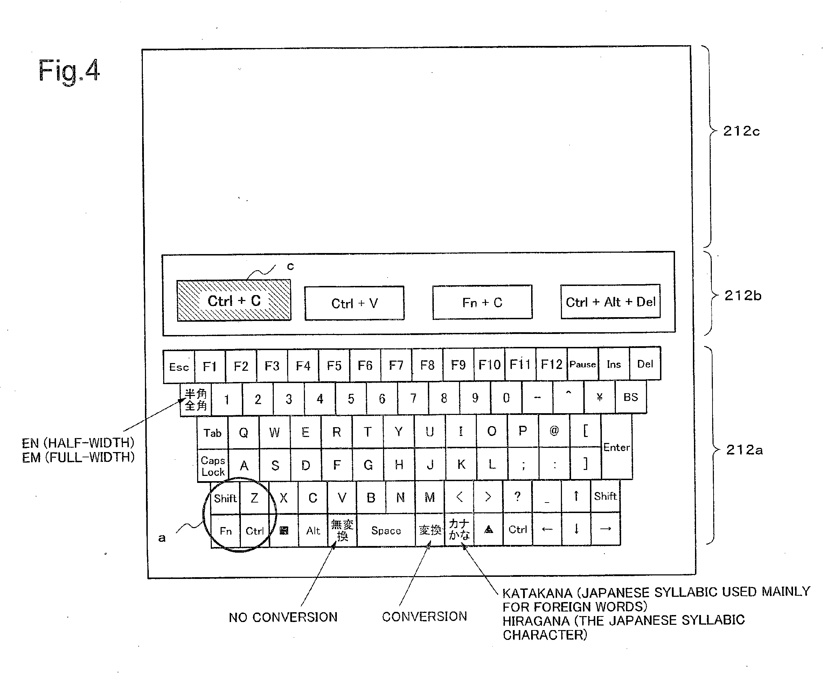

The touch panel device 21 includes a publicly known touch panel device equipped with a display screen, and includes: a detecting unit 211, which detects a position on the display screen touched by the user; and a display unit 212, which makes the display screen perform various displays based on a signal from the control unit 23. On the display screen of the above touch panel 21, as for example shown in FIG. 4, a virtual keyboard display area 212a for displaying a keyboard, an input candidate display area 212b for displaying an input candidate, which will be described later, and an information display area 212c for displaying various information, are at least provided.

### <<Memory device>>

The memory device 22 includes a publicly known memory device, such as a hard disk or a memory, and stores an input dictionary 221, an input historical data 222 and an operation program 223.

Here, in the input dictionary 221, information on inputting a control command, a word or the like, realized by operating (pressing) a plurality of keys simultaneously is stored, and combination of keys which realizes each input is at least stored. Further, a plurality of input dictionaries 221 are provided according to an application or the like using output from the input device 2.

Furthermore, in the input historical data 222, a history of the user's operation input detected by the touch panel device 21 is stored.

### < <Control unit>>

The control unit 23 includes a microprocessor, such as a CPU, and a peripheral circuit thereof, and realizes various function means by reading and executing the operation program 223 stored in the memory device 22, thereby making the hardware resources, as above, and software, cooperate with each other. As the function means, there are a display control unit 231, an input determination unit 232, an input prediction unit 233, a display highlight unit 234, an input control unit 235 and an output unit 236.

The display control unit 231, via the display unit 212 of the touch panel 21, controls displaying the display screen of the touch panel 21. Specifically, as shown in FIG. 4, an image of a keyboard is displayed in the virtual keyboard display area 212a of the touch panel device 21. Moreover, the input candidate display area 212b is made display combination of keys corresponding to a control command or a word which the user is going to input (hereinafter, referred to as an input candidate). Furthermore, it makes the information display area 212c is made display output from the application which is activated based on input from the input device 2.

The input determination unit 232 determines a key which the user is going to input, based on information on a position on the display screen touched by the user which detected by the detecting unit 211 of the touch panel device 21 (hereinafter, referred to as location information), and on information on an image of a keyboard displayed on the display screen of the touch panel device 21 by the display control unit 231 (hereinafter, referred to as image information).

The input prediction unit 233 predicts a control command or a word which the user is going to input and generates an input candidate based on a determination result by the input determination unit 232, the input dictionary 221 and the input historical data 222. Then, when there are plural input candidates, order of priority is attached.

The display highlight unit 234, highlights a key which is predicted to be inputted next in the virtual keyboard display area 212a of the display screen of the touch panel 21 based on an input candidate predicted from a first inputted key by the input prediction unit 233. Moreover, the display highlight unit 234 highlights the input candidate generated by the input prediction unit 233 in the order of priority in the input candidate display area 212b of a display screen of the touch panel 21.

The input control unit 235, when the key predicted to be inputted or the input candidate is highlighted on the display screen of the touch panel 21 by the display highlight unit 234, controls a key or an input candidate outputted as that selected by the user, based on the key operation by the user for the above-mentioned display. For example, when a user's operation to select a key other than the highlighted key on the virtual display area 212a is detected, the operation is made invalid. On the other hand, when an operation to select the highlighted key or the input candidate is detected, the operation is made valid, i.e. accepted, then the information on the selected key or the input candidate is outputted.

The output unit 236 outputs the input candidate selected by the user to an external device or to the touch panel device 21.

### <Input operation by the input device 2>

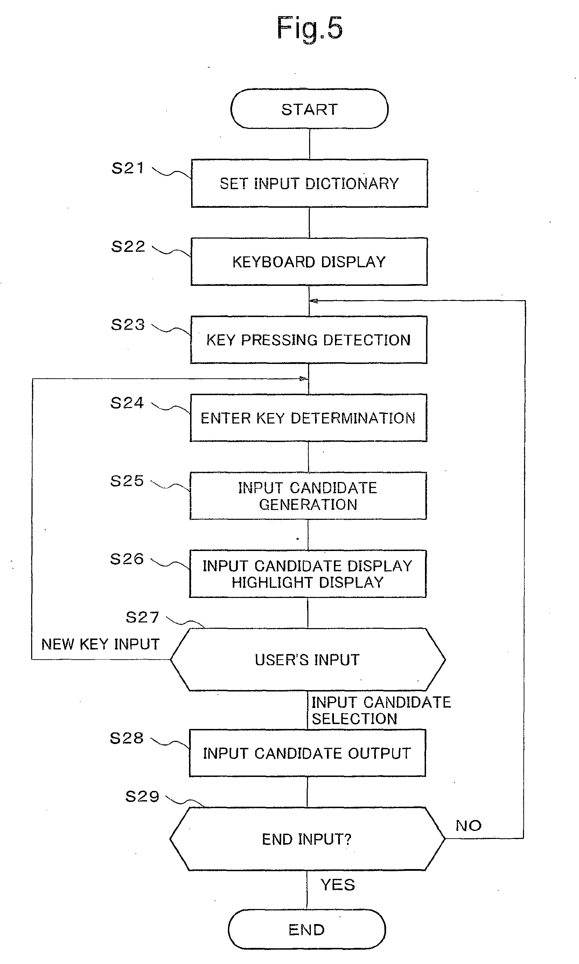

Next, an input operation by the input device 2 according to the present embodiment will be described with reference to FIG. 5.

First, the control unit 23 of the input device 2 configured the input dictionary 221 for use according to the application used by the user, by using the output from the input device 2 (step S21). For example, since commands for use or combinations of keys for the same command for use are often different in an application of a mailer, a memo pad or the like and in an application of a game, a PC remote controlling, when the same input dictionary 221 is used in such a case, it would be difficult to realize the input desired by the user. Accordingly, in the present embodiment, the input dictionary 221 is configured before using the application. Accordingly, the user can realize the desired input on using the application. Furthermore, the configuration for the input dictionary 221 may be performed based on a control signal received from the application or an operation input by the user via the touch panel 21 or the like.

After configuring the input dictionary 221, when use of the application using the keyboard is requested from the user, or when displaying a keyboard is requested from the application, the display control unit 231 of the control unit 23, as shown in FIG. 4, displays an image of a keyboard on the virtual keyboard display area 212a of the touch panel device 21 (Step S22).

After the image of the keyboard is displayed on the virtual keyboard display area 212a of the touch panel 21, when the user touches the image, the detecting unit 211 of the touch panel device 21 transmits location information on a touched position to the control unit 23 (Step S23). The location information includes information on a central position which the user touched and a touched area.

When the location information is received, the input determination unit 232 of the control unit 23 determines a key, which the user is going to input, based on the location information and image information on the image of the keyboard (hereinafter, referred to as a candidate key) (Step S24).
For example, when location information indicating that a position first touched by the user on the display screen of the touch panel device 21 is in an area denoted by a in FIG. 4 is received,
the input determination unit 232 determines each of keys located in the area denoted by a, i.e. keys of "Shift", "Z", "Fn" and "Ctrl", is determined as a key candidate first inputted (hereinafter, the first candidate key). Thus, when a plurality of first candidate keys are determined, the input determination unit 232 outputs all the first candidate keys.

When the first candidate key is determined, the input prediction unit 233 of the control unit 23 generates an input candidate based on the candidate key and the input dictionary 221 (Step S25). Specifically, the input prediction unit 233 combines each of the first candidate keys and other key included in the keyboard, and extracts combination, which could be a predetermined control command or a word (input candidate) from combinations thereof, from the input dictionary 221.

Here, when a plurality of input candidates are extracted, the input prediction unit 233 may attach an order of priority to the input candidates. Ordering of the priority is performed based on the order of priority of the first candidate key and the input historical data 222. The order of priority of the first candidate key is attached according to a distance from the central position on the screen touched by the user to the position of each key or a pressure of the finger when the user operates. For example, when the area denoted by a in FIG. 4 is pressed, the order of priority will be "Ctrl", "Fn", "Z" and "Shift" from the higher order. Accordingly, to an input candidate including "Ctrl" which is a first candidate of the highest order of priority, higher order of priority is given. Moreover, the order of priority based on the input historical data 222 is given according to a timing of output and a frequency of output. For example, higher order of priority will be given to the same input candidate as the word or the control command, which is recently outputted or outputted a lot of times up to now.

When an input candidate is generated, the display highlight unit 234 highlights a key predicted to be inputted next (hereinafter, referred to as the second candidate key) in the virtual keyboard display area 212a, and displays an input candidate display area 212b (Step S26).

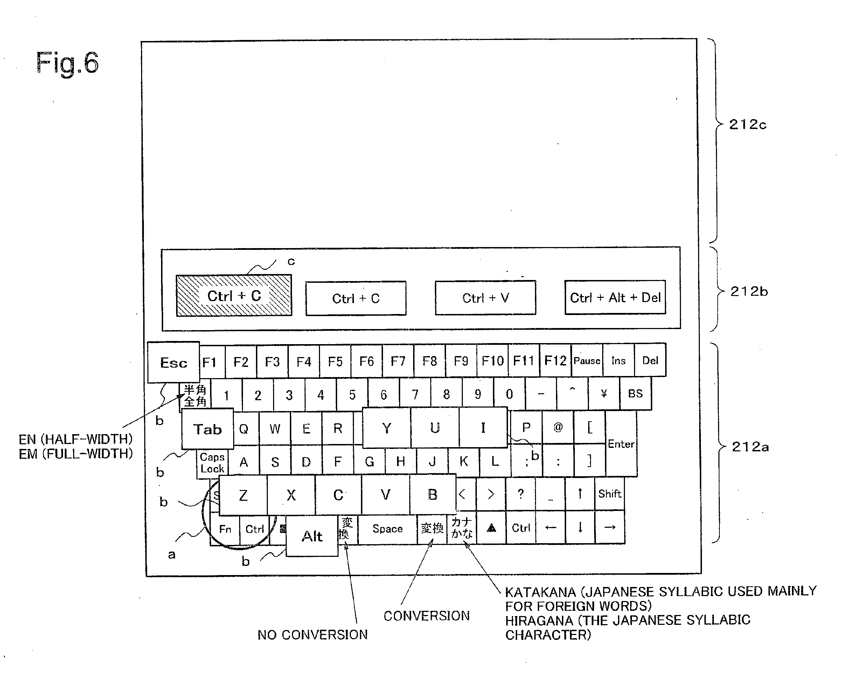

Highlighting the second candidate key is performed based on an input candidate extracted by the input prediction unit 233.
That is, a key to be paired with the first candidate key in the input candidate is displayed in the virtual keyboard display area 212a. The key to be paired, i.e. the second candidate key is highlighted, e.g. by made larger than other keys, as shown denoted by b in FIG. 6. Accordingly, the user can recognize more easily a key to touch text.

Furthermore, in Fig. 6, the case where the position on the display screen first touched by the user is the area denoted by a, the first key candidate determined by the input determination unit is "Ctrl", and an input candidate is predicted based only on the first key candidate "Ctrl" by the input prediction unit 233, is illustrated. Thus, even in the case where a plurality of first candidate keys are determined, by predicting an input candidate based only on any one of the first candidate keys, displaying many second key candidates on the display screen to make the user confuse can be prevented. Furthermore, the highlighting is, as long as the second candidate key is displayed more distinctly than other keys, not limited to displaying the key larger, it may be configured appropriately, e.g. assigning different color from other keys.

Thus, when the second candidate key is highlighted and displayed, the input control unit 235, even if the user touches the display screen of the touch panel device 21 on a position corresponding to a key other than the highlighted key, invalidates the input by the key which is not highlighted. That is, when the second candidate key is highlighted and displayed, if location information detected by the detecting unit 211 of the touch panel device 21 is a position corresponding to a key which is not highlighted, the input control unit 235 does not output the location information to the input determination unit 232. As a result, an unintended input by the user can be prevented.

The display of an input candidate, when a plurality of input candidates is generated, is performed based on the attached order of priority. That is, the display highlight unit 234 displays predetermined number of input candidates from the highest order of priority on the input candidate display area 212b of the display screen of touch panel 21. Then, the display highlight unit 234 highlights and displays the input candidate of the highest order of priority than the other candidates. For example, when the order of priority of the input candidate for "Ctrl+C" is the highest, as shown in an area denoted by c in FIG. 6, a character size of the input candidate displayed at the left end of C may be larger than the other input candidates and color of the input candidate may be different from other input candidates. As a result, the user can be made effectively recognized an input candidate of higher order of priority. Furthermore, when only one input candidate is generated, the display highlight unit 234 displays only the input candidate on the input candidate display area 212b.

Thus, after the second candidate key and the input candidate are displayed, when a part on the display screen corresponding to any one of the second candidate keys is touched by the user, or a position on the display screen touched by the user moves (Step S27: new key input), the input control unit 235 returns the processing back to Step S24, and generates again a key candidate or an input candidate.

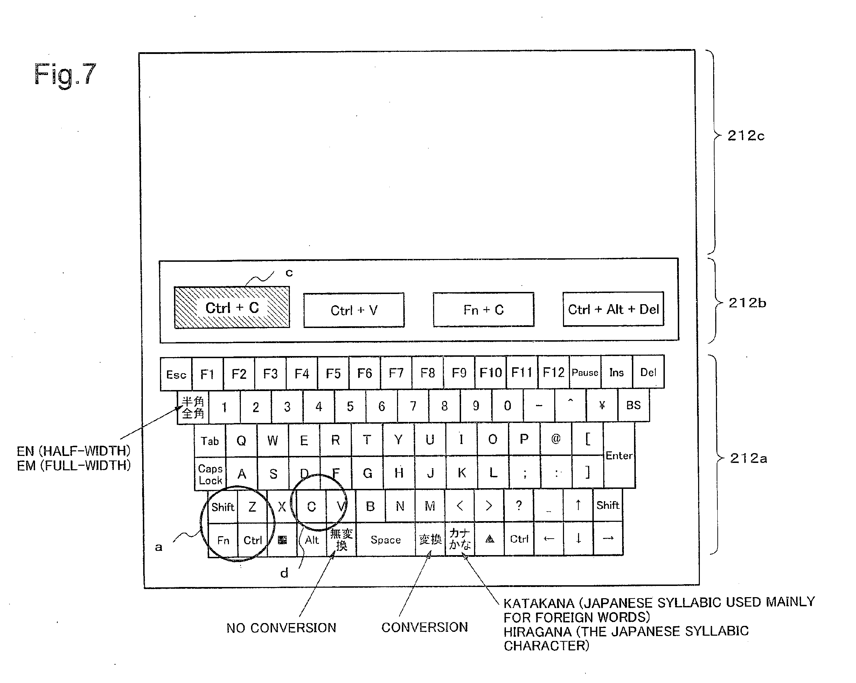

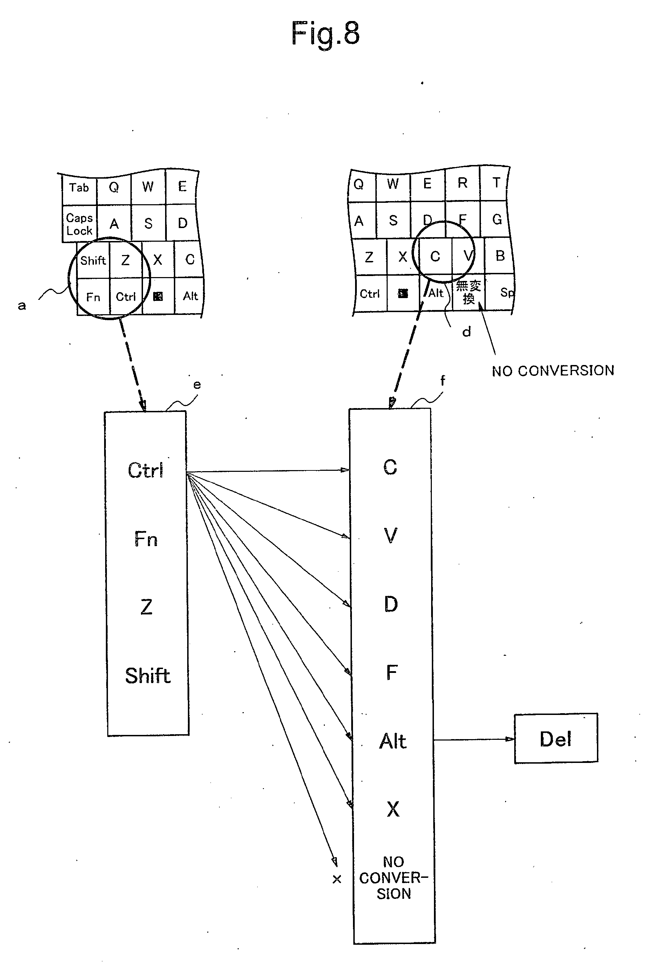

For example, as shown in FIG. 7, when the user touches the part denoted by d in addition to the part denoted by a on the display screen, the input prediction unit 233 of the control unit 23 combines respective candidate keys, extracts combinations which can be an input candidate from the combinations, attaches order of priority to the extracted input candidates, and outputs them as an input candidate. Specifically, first, as shown in FIG. 8, candidate keys, which are included in candidate key group e determined from the area denoted by a, and in candidate key group f determined from the area denoted by d, respectively, are combined, and based on the input dictionary 221, a combination, which can be a predetermined control command or a word, is extracted from the combinations. For example, when "Ctrl" included in the candidate key group c is combined with respective keys included in the candidate key group d, candidate keys which can be control commands are "C", "V", "Alt" and "X". Accordingly, these combinations, i.e. "Ctrl"+ "C", "Ctrl" + "V", "Ctrl" + "Alt" and "Ctrl" + "X" are extracted as input candidates. Similarly, for the candidate keys which are included in the candidate key group e and are other than "Ctrl", by combining with respective key candidate included in the candidate key group f, input candidates are generated. Accordingly, the input prediction unit 233 extracts a large number of input candidates. Here, a combination of "Ctrl" and "Alt" becomes relevant to a control command by further combining with "Del". In such a case, the input prediction unit 233 extracts such a combination, i.e. "Ctrl"+ "Alt" + "Del", as an input candidate. Thus, in a case that a key candidate can be an input candidate by further combining with other key, these key combinations are extracted as input candidates.

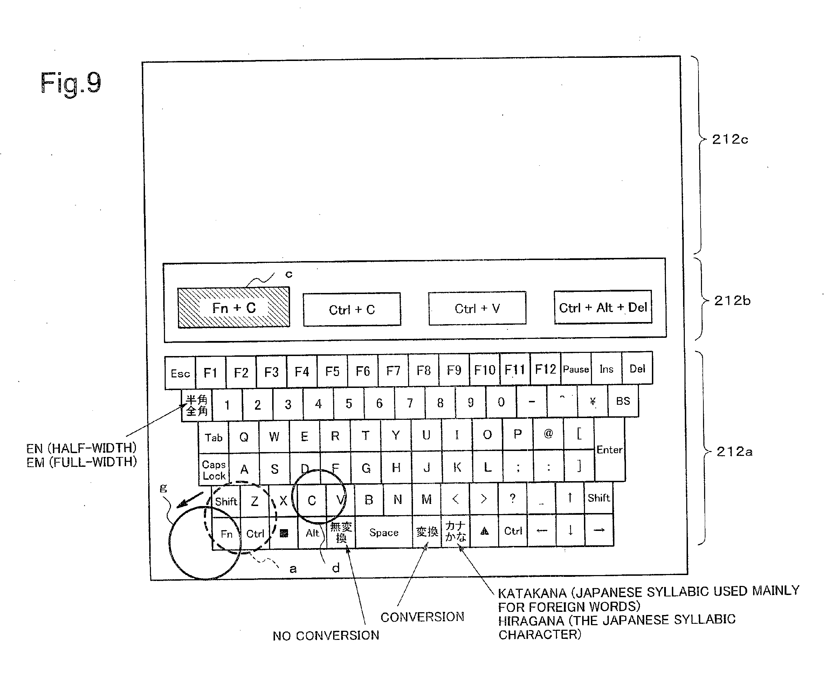

When the position on the display screen touched by the user has moved, the input control unit 235, based on the location information corresponding to the moved part, determines again a candidate key. For example, as shown in FIG. 9, when the user touches parts indicated denoted by a and d on the virtual keyboard display area 212a simultaneously, and when a finger touching the part denoted by a moves to a part denoted by g, the input determination unit 232, based on location information on a part denoted by b and on a part denoted by f, determines again a candidate key. Thus, by moving appropriately the position on the display screen touched by the user, a candidate key is determined again, and the prediction of an input candidate is again performed, thereby the input candidate shown on the input candidate display area 212b can be appropriately changed.

On the other hand, when after the second candidate key and input candidate are displayed any one of the input candidates is selected (Step S27: input candidate selection), the input control unit 235 outputs the input candidate selected by the output unit 236 to an external device or displays it on the display screen of the touch panel device 21 (Step S28). Afterwards, when a key input is further performed (step S29: NO), the input control unit 235 returns to the processing of Step S23. When a key input finishes (step S29: YES), the input control unit 235 ends the input operation.

Here, the selection of an input candidate is performed by, releasing the finger from the display screen when a desired input candidate is located at the left end of the input candidate display area 212b, touching a desired input candidate on the display screen, touching a desired input candidate after releasing the finger from the display screen when the desired input candidate is displayed in the input candidate display area 212b, or the like.

As explained above, according to the present embodiment, when the second candidate key is highlighted and displayed in the virtual keyboard display area 212a, if location information detected by the detecting unit 211 of the touch panel device 21 is a position corresponding to the key which is not highlighted, the input control unit 235 does not have the location information be inputted into the input determination unit 232. As a result, even if a wrong pressing by the user occurs, the operation is made invalidated, thereby the user can input an intended key smoothly.

Furthermore, according to the present embodiment, it has been described for case of applying to an input device equipped with an interface device, such as a touch panel device, which detects a key operation, and a display device as an example, but the configuration of the input device is not limited thereof, and it can be set appropriately. For example, it can be applied to an input device which is not equipped with an interface device. In this case, the input device generates an input candidate or the like based on information on an operation of a key inputted from the external. Furthermore, it may be provided inside an information processing apparatus, such as a PC equipped with an interface and a display device. In this case, an input candidate or the like is generated based on an input from an interface device such as a keyboard provided in the information processing apparatus, and is outputted to a display device provided in the information processing apparatus. With such a configuration, the specific operation effect according to the embodiments mentioned above can be realized.

### INDUSTRIAL APPLICABILITY

The present invention can be applied to various devices equipped with an input device such as a PC, a PDA, a mobile phone and an automatic ticket vending machine.

### REFERENCE SIGNS LIST

- 1,2: input device;
- 11: detecting unit
- 12: memory unit
- 13: prediction unit
- 14: input control unit
- 21: touch panel device.
- 22: memory device
- 23: control unit
- 211: detecting unit
- 212: display unit
- 212a: virtual keyboard display area
- 212b: input candidate display area
- 212c: information display area
- 221: input dictionary
- 222: input historical data
- 223: operation program
- 231: display control unit
- 232: input determination unit
- 233: input prediction unit
- 234: display highlight unit
- 235: input control unit
- 236: output unit

## Claims

1. An input device for performing an input by a plurality of keys operated simultaneously, comprising:
detecting means (11) for detecting a state of keys;
memory means (12) for storing a combination of keys operated simultaneously, which corresponds to a predetermined input; and
prediction means (13) for predicting a combination of keys, according to said detected state of keys by said detecting means (11) and said stored combination of keys in said memory means (12); **characterized by** further comprising
input control means (14) for controlling keys, so that an operation for a key, which is not included in said predicted combination by said prediction means (13), is invalid.

2. The input device according to claim 1, further comprising
display means for displaying said predicted combination by said prediction means (13).

3. The input device according to claim 1 or 2, wherein
said prediction means (13) predicts a combination of keys, when said detecting means (11) detects a change in the state of keys.

4. The input device according to claim 2 or 3, further comprising
highlight display means for displaying a key included in said predicted combination by said prediction means (13), so as to have a different feature from a key, which is not included in said predicted combination.

5. An information processing apparatus for performing an information processing according to an input, comprising an input device according to any one of claims 1 to 4.

6. An input method of performing an input by a plurality of keys operated simultaneously, comprising:
detecting a state of keys;
storing a combination of keys operated simultaneously, which corresponds to a predetermined input; and
predicting a combination of keys, according to said detected state of keys and said stored combination of keys; **characterized by** further comprising
controlling keys, so that an operation for a key, which is not included in said predicted combination, is invalid.

7. The input method according to claim 6, further comprising:
displaying said predicted combination.

8. The input method according to claim 6 or 7, further comprising:
when a change in the state of keys is detected, predicting a combination of keys.

9. The input method according to claim 7 or 8, wherein
a key included in said predicted combination of keys is displayed, so that the key has a different feature from akey, which is not included in said predicted combination.

10. A computer program for performing an input by a plurality of keys operated simultaneously, the computer program causing a control unit of a computer to execute:
a detection process for detecting a state of keys;
a memory process for storing a combination of keys operated simultaneously, which corresponds to a predetermined input; and
a prediction process for predicting a combination of keys, according to said detected state of keys and said stored combination of keys; **characterized by**
an input control process for controlling keys, so that an operation for a key, which is not included in said predicted combination, is invalid.

11. A recording medium, in which a program which makes a computer execute processing to perform input by a plurality of keys operated simultaneously, the processing comprising:
a detection process for detecting a state of keys;
a memory process for storing a combination of keys operated simultaneously which corresponds to a predetermined input; and
a prediction process for predicting a combination of keys, according to said detected state of keys and said stored combination of keys; **characterized by** further comprising
an input control process for controlling keys, so that an operation for a key, which is not included in said predicted combination, is invalid.

## Patentansprüche

1. Eingabevorrichtung zum Ausführen einer Eingabe über mehrere gleichzeitig betätigte Tasten, mit:
einer Erfassungseinrichtung (11) zum Erfassen eines Tastenzustands;
einer Speichereinrichtung (12) zum Speichern einer einer vorgegebenen Eingabe entsprechenden Kombination gleichzeitig betätigter Tasten; und
einer Vorausbestimmungseinrichtung (13) zum Vorausbestimmen einer Tastenkombination gemäß dem durch die Erfassungseinrichtung (11) erfassten Tastenzustand und der in der Speichereinrichtung (12) gespeicherten Tastenkombination;
**dadurch gekennzeichnet, dass** die Eingabevorrichtung ferner aufweist:
eine Eingabesteuerungseinrichtung (14) zum Steuern von Tasten derart, dass eine Betätigung einer Taste, die nicht in der durch die Vorausbestimmungseinrichtung (13) vorausbestimmten Kombination enthalten ist, ungültig ist.

2. Eingabevorrichtung nach Anspruch 1, ferner mit:
einer Displayeinrichtung zum Darstellen der durch die Vorausbestimmungseinrichtung (13) vorausbestimmten Kombination.

3. Eingabevorrichtung nach Anspruch 1 oder 2, wobei
die Vorausbestimmungseinrichtung (13) eine Tastenkombination vorausbestimmt, wenn die Erfassungseinrichtung (11) eine Änderung des Tastenzustands erfasst.

4. Eingabevorrichtung nach Anspruch 2 oder 3, ferner mit
einer Hervorhebungsdarstellungseinrichtung zum Darstellen einer Taste, die in der durch die Vorausbestimmungseinrichtung (13) vorausbestimmten Tastenkombination enthalten ist, derart, dass sie ein anderes Merkmal als eine Taste hat, die nicht in der vorausbestimmten Kombination enthalten ist.

5. Informationsverarbeitungsvorrichtung zum Ausführen einer Informationsverarbeitung gemäß einer Eingabe, mit einer Eingabevorrichtung nach einem der Ansprüche 1 bis 4.

6. Eingabeverfahren zum Ausführen einer Eingabe über mehrere gleichzeitig betätigte Tasten, mit den Schritten:
Erfassen eines Tastenzustands;
Speichern einer einer vorgegebenen Eingabe entsprechenden Kombination gleichzeitig betätigter Tasten; und
Vorausbestimmen einer Tastenkombination gemäß dem erfassten Tastenzustand und der gespeicherten Tastenkombination;
**dadurch gekennzeichnet, dass**
das Verfahren ferner das Steuern von Tasten derart aufweist, dass eine Betätigung einer Taste, die nicht in der vorausbestimmten Kombination enthalten ist, ungültig ist.

7. Eingabeverfahren nach Anspruch 6, ferner mit dem Schritt zum Darstellen der vorausbestimmten Kombination.

8. Eingabeverfahren nach Anspruch 6 oder 7, ferner mit dem Schritt zum Vorausbestimmen einer Tastenkombination, wenn eine Änderung des Tastenzustands erfasst wird.

9. Eingabeverfahren nach Anspruch 7 oder 8, wobei
eine in der vorausbestimmten Tastenkombination enthaltene Taste derart dargestellt wird, dass sie ein anderes Merkmal als eine Taste hat, die nicht in der vorausbestimmten Kombination enthalten ist.

10. Computerprogramm zum Ausführen einer Eingabe über mehrere gleichzeitig betätigte Tasten, wobei das Computerprogramm eine Steuereinheit eines Computers veranlasst, die folgenden Prozesse auszuführen:
einen Erfassungsprozess zum Erfassen eines Tastenzustands;
einen Speicherprozess zum Speichern einer einer vorgegebenen Eingabe entsprechenden Kombination gleichzeitig betätigter Tasten; und
einen Vorausbestimmungsprozess zum Vorausbestimmen einer Tastenkombination gemäß dem erfassten Tastenzustand und der gespeicherten Tastenkombination;
**gekennzeichnet durch**
eine Eingabesteuerverarbeitung zum Steuern von Tasten derart, dass eine Betätigung einer Taste, die nicht in der vorausbestimmten Kombination enthalten ist, ungültig ist.

11. Speichermedium, in dem ein Programm gespeichert ist, das einen Computer veranlasst, eine Verarbeitung zum Ausführen einer Eingabe über mehrere gleichzeitig betätigte Tasten auszuführen, wobei die Verarbeitung aufweist:
einen Erfassungsprozess zum Erfassen eines Tastenzustands;
einen Speicherprozess zum Speichern einer einer vorgegebenen Eingabe entsprechenden Kombination gleichzeitig betätigter Tasten; und
einen Vorausbestimmungsprozess zum Vorausbestimmen einer Tastenkombination gemäß dem erfassten Tastenzustand und der gespeicherten Tastenkombination;
**dadurch gekennzeichnet, dass** die Verarbeitung ferner aufweist:
einen Eingabesteuerprozess zum Steuern von Tasten derart, dass eine Betätigung einer Taste, die nicht in der vorausbestimmten Kombination enthalten ist, ungültig ist.

## Revendications

1. Dispositif d'entrée pour exécuter une entrée par l'intermédiaire d'une pluralité de touches actionnées simultanément, comprenant :
des moyens de détection (11) pour détecter un état de touches,
des moyens de mémoire (12) pour stocker une combinaison de touches actionnées simultanément, laquelle correspond à une entrée prédéterminée, et
des moyens de prédiction (13) pour prédire une combinaison de touches, conformément audit état détecté de touches par lesdits moyens de détection (11) et ladite combinaison stockée de touches dans lesdits moyens de mémoire (12), **caractérisé en ce qu'**il comporte en outre
des moyens de commande d'entrée (14) pour commander des touches, de sorte qu'une opération sur une touche, qui n'est pas comprise dans ladite combinaison prévue par lesdits moyens de prédiction (13), est invalide.

2. Dispositif d'entrée selon la revendication 1, comprenant en outre
des moyens d'affichage pour afficher ladite combinaison prévue par lesdits moyens de prédiction (13).

3. Dispositif d'entrée selon la revendication 1 ou 2, dans lequel
lesdits moyens de prédiction (13) prédisent une combinaison de touches, lorsque lesdits moyens de détection (11) détectent un changement dans l'état de touches.

4. Dispositif d'entrée selon la revendication 2 ou 3, comprenant en outre
des moyens d'affichage en surbrillance pour afficher une touche comprise dans ladite combinaison prédite par lesdits moyens de prédiction (13) de manière à avoir une fonction différente d'une touche, qui n'est pas comprise dans ladite combinaison prédite.

5. Appareil de traitement d'informations pour exécuter un traitement d'informations conformément à une entrée, comportant un dispositif d'entrée selon l'une quelconque des revendications 1 à 4.

6. Procédé d'entrée pour exécuter une entrée par une pluralité de touches actionnées simultanément, comportant de :
détecter un état de touches,
mémoriser une combinaison de touches actionnées simultanément, laquelle correspond à une entrée prédéterminée, et
prédire une combinaison de touches, conformément audit état détecté de touches et de ladite combinaison stockée de touches, **caractérisé en ce qu'**il comporte en outre
de commander des touches, de sorte qu'une opération sur une touche, qui n'est pas comprise dans ladite combinaison prédite, est invalide.

7. Procédé d'entrée selon la revendication 6, comprenant en outre :
d'afficher ladite combinaison prédite.

8. Procédé d'entrée selon la revendication 6 ou 7, comprenant en outre :
lorsqu'un changement dans l'état de touches est détecté, de prédire une combinaison de touches.

9. Procédé d'entrée selon la revendication 7 ou 8, dans lequel
une touche comprise dans ladite combinaison prédite de touches est affichée, de sorte que la touche a une fonction différente d'une touche, qui n'est pas comprise dans ladite combinaison prédite.

10. Programme informatique pour exécuter une entrée par l'intermédiaire d'une pluralité de touches actionnées simultanément, le programme informatique amenant une unité de commande d'un ordinateur à exécuter :
un processus de détection pour détecter un état de touches,
un processus de mémoire pour stocker une combinaison de touches actionnées simultanément, qui correspond à une entrée prédéterminée, et
un processus de prédiction pour prédire une combinaison de touches, conformément audit état détecté de touches et à ladite combinaison stockée de touches, **caractérisé par**
un processus de commande d'entrée pour commander des touches, de sorte qu'une opération sur une touche, qui n'est pas comprise dans ladite combinaison prédite, est invalide.

11. Support d'enregistrement, dans lequel un programme amène un ordinateur à exécuter un traitement pour effectuer une entrée par l'intermédiaire d'une pluralité de touches actionnées simultanément, le traitement comprenant :
un processus de détection pour détecter un état de touches,
un processus de mémoire pour stocker une combinaison de touches actionnées simultanément, lequel correspond à une entrée prédéterminée, et
un processus de prédiction pour prédire une combinaison de touches, conformément audit état détecté de touches et à ladite combinaison stockée de touches, **caractérisé en ce qu'**il comporte en outre
un processus de commande d'entrée pour commander des touches, de sorte qu'une opération pour une touche, qui n'est pas comprise dans ladite combinaison prédite, est invalide.
